# EUROPEAN PATENT APPLICATION

(11) **EP 2 139 298 A2**
(43) Date of publication of application: **30.12.2009**
(21) Application number: 09006351.2
(22) Date of filing: 11.05.2009
(51) Int. Cl.: H05B 33/08

(54) **Power supply circuit with current sharing for driving multiple sets of dc loads**

(30) Priority: 23.06.2008 TW 97123381
(71) Applicant: Delta Electronics, Inc., Taoyuan Sien 333, Taiwan (CN)
(72) Inventor: Huang, Chung-Tsai, Taoyuan Hsien 320 (TW); Yan, Shang-Jin, Taoyuan Hsien 320 (TW); Cheng, Ching-Chi, Taoyuan Hsien 320 (TW); Lee, Po-Yi, Taoyuan Hsien 320 (TW)
(74) Representative: UEXKÜLL & STOLBERG

(57) **Abstract**

The present invention provides a power supply circuit for driving multiple sets of DC loads. The power supply circuit includes a current providing circuit, a sharing circuit and a current control unit. The current providing circuit receives and regulates a supply voltage into specified output currents to be supplied to the multiple sets of DC loads. The sharing circuit is connected in series with output terminals of the current providing circuit and the multiple sets of DC loads. The sharing circuit includes at least one coupling inductor member for performing equal current sharing among the multiple sets of DC loads. The current control unit is connected to the current providing circuit and the multiple sets of DC loads for detecting magnitudes of the current passing through the multiple sets of DC loads and controlling the output currents from the current providing circuit.

## Description

### FIELD OF THE INVENTION

The present invention relates to a power supply circuit, and more particularly to a power supply circuit with current sharing for driving multiple sets of DC loads.

### BACKGROUND OF THE INVENTION

In recent years, light emitting diodes (LEDs) capable of emitting light with high luminance and high illuminating efficiency have been developed. In comparison with a common incandescent light, a LED has lower power consumption, long service life, and quick response speed. With the maturity of the LED technology, LEDs will replace all conventional lighting facilities. Until now, LEDs are widely used in many aspects of daily lives, such as automobile lighting devices, handheld lighting devices, backlight sources for LCD panels, traffic lights, indicator board displays, and the like.

Generally, LEDs are DC loads. When an electronic device (e.g. a LCD panel) having multiple LED strings is operated, the currents passing through all LED strings shall be identical for a purpose of obtaining uniform brightness. Due to different inherent characteristics of these LED strings, the currents passing therethrough are not identical and the brightness is usually not uniform. Therefore, the use life of individual LED string is shortened or even the whole electronic device has a breakdown.

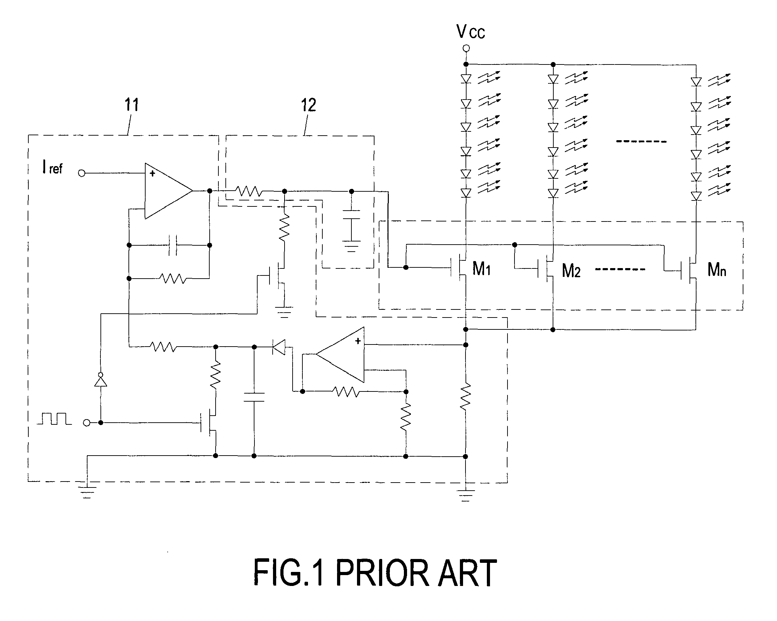

For obtaining uniform brightness of multiple LED strings, several current sharing techniques have been disclosed. For example, as shown in FIG. 1, US Patent No. 6,621,235 disclosed an integrated LED driving circuit with current sharing for multiple LED strings. The LED driving circuit of FIG. 1 principally includes a linear regulator 11, a low-pass filter 12 and multiple current mirrors M₁∼Mₙ. A constant reference current I_{ref} is inputted into a first terminal of the linear regulator 11. The linear regulator 11 is controlled with the constant reference current I_{ref} and thus an output voltage is generated and transmitted to the low-pass filter 12. The output voltage is filtered by the low-pass filter 12 and then transmitted to the gates of the current mirrors M₁∼Mₙ. As a consequence, these current mirrors M₁∼Mₙ outputs identical currents. In other words, the LED strings linked to the current mirrors M₁∼Mₙ have the same current and brightness.

The conventional driving circuit with current sharing for multiple LED strings, however, still has some drawbacks. For example, since the linear regulator and the current mirrors are employed, the conventional driving circuit with current sharing for multiple LED strings has high power loss but low operating efficiency. In addition, since more components are used, the conventional driving circuit with current sharing for multiple LED strings is very complicated.

There is a need of providing an improved power supply circuit with current sharing for driving multiple sets of DC loads to obviate the drawbacks encountered from the prior art.

### SLTMMARY OF THE INVENTION

It is an object of the present invention to provide a power supply circuit with current sharing for driving multiple sets of DC loads, in which the currents passing through all sets of DC loads are identical for a purpose of achieving uniform brightness.

Another object of the present invention provides a power supply circuit with current sharing for driving multiple sets of DC loads, in which the power supply circuit has minimized power loss, high operating efficiency and simplified circuitry configuration.

In accordance with an aspect of the present invention, there is provided a power supply circuit with current sharing for driving multiple sets of DC Loads. The power supply circuit includes a current providing circuit, a sharing circuit and a current control unit. The current providing circuit receives and regulates a supply voltage into specified output currents to be supplied to the multiple sets of DC loads. The sharing circuit is connected in series with output terminals of the current providing circuit and the multiple sets of DC loads. The sharing circuit includes at least one coupling inductor member for performing equal current sharing among the multiple sets of DC loads. The current control unit is connected to the current providing circuit and the multiple sets of DC loads for detecting magnitudes of the current passing through the multiple sets of DC loads and controlling the output currents from the current providing circuit.

In accordance with an aspect of the present invention, there is provided a sharing circuit for use in a power supply circuit with current sharing for driving multiple sets of DC loads. The power supply circuit comprises a current providing circuit for receiving and regulating a supply voltage into specified output currents to be supplied to the multiple sets of DC loads. The sharing circuit is connected in series with output terminals of the current providing circuit and the multiple sets of DC loads. The sharing circuit comprises at least one set of inductors. Each set of inductors comprises at least one coupling inductor member. Each coupling inductor member comprises plural inductors for performing equal current sharing among the multiple sets of DC loads.

The above contents of the present invention will become more readily apparent to those ordinarily skilled in the art after reviewing the following detailed description and accompanying drawings, in which:

### BRIEF DESCRIPTION OF THE DRAWINGS

FIG. 1 is a schematic circuit diagram of a driving circuit with current sharing for multiple LED strings according to the prior art;

FIG. 2A is a schematic circuit block diagram of a power supply circuit with current sharing for driving multiple LED strings according to a preferred embodiment of the present invention;

FIG. 2B is a schematic circuit block diagram of a power supply circuit with current sharing for driving multiple LED strings according to another preferred embodiment of the present invention;

FIG. 3 is a schematic detailed circuit diagram illustrating a part of the power supply circuit shown in FIG. 2A;

FIG. 4 is a schematic detailed circuit diagram illustrating a part of the power supply circuit with current sharing for driving multiple LED strings according to a further preferred embodiment of the present invention;

FIG. 5 schematically illustrates an exemplary sharing circuit used in the power supply circuit of the present invention;

FIG. 6 schematically illustrates another exemplary sharing circuit used in the power supply circuit of the present invention;

FIG. 7 schematically illustrates another exemplary sharing circuit used in the power supply circuit of the present invention;

FIG. 8 schematically illustrates another exemplary sharing circuit used in the power supply circuit of the present invention;

FIG. 9 schematically illustrates another exemplary sharing circuit used in the power supply circuit of the present invention;

FIG. 10 schematically illustrates another exemplary sharing circuit used in the power supply circuit of the present invention; and

FIG. 11 schematically illustrates another exemplary sharing circuit used in the power supply circuit of the present invention.

### DETAILED DESCRIPTION OF THE PREFERRED EMBODIMENT

The present invention will now be described more specifically with reference to the following embodiments. It is to be noted that the following descriptions of preferred embodiments of this invention are presented herein for purpose of illustration and description only. It is not intended to be exhaustive or to be limited to the precise form disclosed.

The present invention relates to a power supply circuit with current sharing for driving multiple sets of DC loads such as multiple LED strings. Each LED string includes a plurality of LEDs. For clarification, each LED string having two LEDs is shown in the drawings.

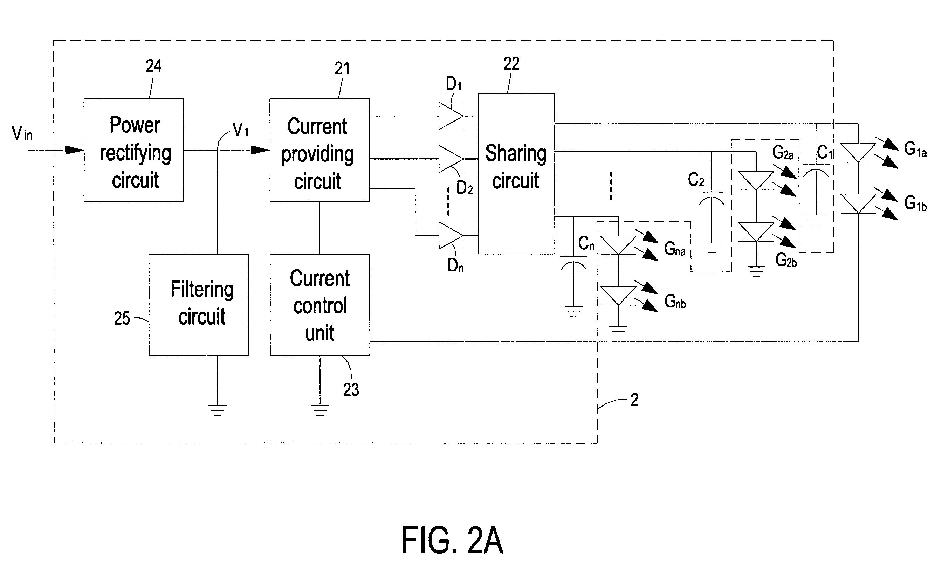

FIG. 2A is a schematic circuit block diagram of a power supply circuit with current sharing for driving multiple LED strings according to a preferred embodiment of the present invention. As shown in FIG. 2A, the power supply circuit 2 principally includes a current providing circuit 21, a sharing circuit 22 and a current control unit 23.

A supply voltage V₁ (e.g. a DC voltage) is regulated by the current providing circuit 21 into specified output currents to be supplied to the LEDs G₁ₐ∼G_{nb} of n sets of LED strings. In the drawings, the former codes 1, 2, ..., n denote the serial numbers of the LED strings. The latter codes a and b denote first and second LEDs included in each LED string, respectively. Each sharing circuit 22 includes at least one coupling inductor member. The coupling inductor member of the sharing circuit 22 is connected in series with the output terminal of the current providing circuit 21 and the LEDs G₁ₐ∼G_{nb} to perform equal current sharing among the LEDs G₁ₐ∼G_{nb}. The current control unit 23 is electrically connected to the current providing circuit 21 and at least one of the n LED strings. The current control unit 23 can detect the currents passing through the n LED strings and control the output currents from the current providing circuit 21. In this embodiment, the current control unit 23 is connected in series with the LEDs G₁ₐ and G_{1b} of the first LED string for detecting the current passing through one of the n sets of LED strings, thereby controlling the currents passing through the n sets of LED strings. The current providing circuit 21 used in the present invention can be an isolated or non-isolated current providing circuit.

In some embodiments, the power supply circuit 2 of the present invention further comprises multiple rectifiers D₁∼Dₙ, a power rectifying circuit 24, a filtering circuit 25 and multiple capacitors C₁∼Cₙ. Examples of the rectifiers D₁∼Dₙ are diodes. These rectifiers D₁∼Dₙ are connected in series with the output terminals of the current providing circuit 21, the sharing circuit 22 and the LEDs G₁ₐ-G_{nb} such that the output currents from the current providing circuit 21 flow in an unidirectional direction. That is, the output currents flow from the current providing circuit 21 to the LEDs G₁ₐ∼G_{nb}. Alternatively, if the polarities of one or more of the rectifiers D₁∼Dₙ and the polarities of corresponding LED strings are changed as required, so that the directions of flowing currents through the selected LED strings are changed.

The power rectifying circuit 24 is connected to the input terminal of the current providing circuit 21. An AC voltage Vᵢₙ is received by the power rectifying circuit 24 and converted into the supply voltage V₁ required for the current providing circuit 21. In some embodiment, the power rectifying circuit 24 has the function of power factor correction. The filtering circuit 25 is connected to the output terminals of the power rectifying circuit 24 for filtering off undesired high frequency noise. The capacitors C₁∼Cₙ are connected to corresponding LED strings.

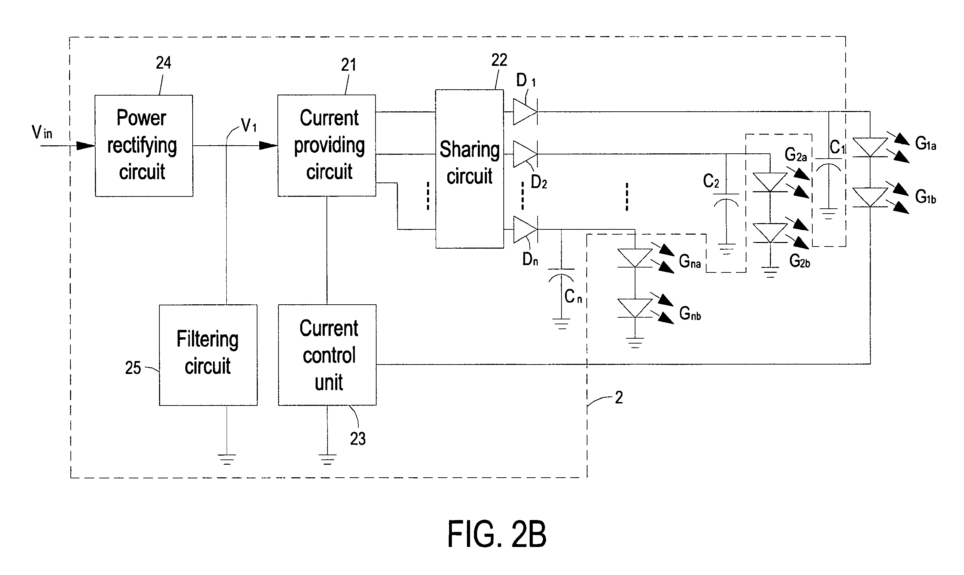

In the power supply circuit 2 of FIG. 2A, the rectifiers D₁∼Dₙ are connected in series between the output terminals of the current providing circuit 21 and the sharing circuit 22. In a further embodiment, as shown in FIG. 2B, the rectifiers D₁∼Dₙ are connected in series between the sharing circuit 22 and corresponding LED strings.

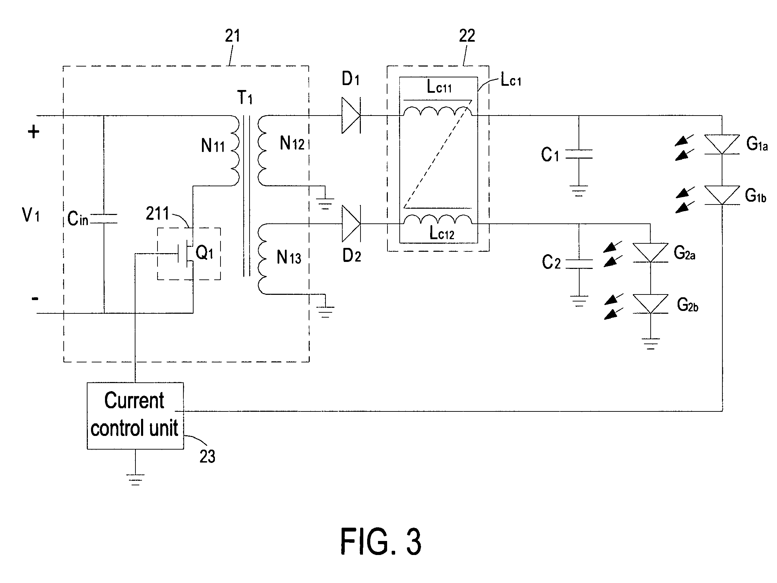

FIG. 3 is a schematic detailed circuit diagram illustrating a part of the power supply circuit shown in FIG. 2A. As shown in FIG. 3, the current providing circuit 21 is an isolated current providing circuit. The current providing circuit 21 includes an input capacitor Cᵢₙ, a switching circuit 211 and a first transformer T₁. The input capacitor Cᵢₙ is connected to the input terminals of the current providing circuit 21. The switching circuit 211 is connected to the input capacitor Cᵢₙ, the current control unit 23, an input terminal of the current providing circuit 21 and a primary winding coil N₁₁ of the first transformer T₁. The switching circuit 211 includes at least one switching element, which is controlled by the current control unit 23. In this embodiment, the switching circuit 211 includes a first switching element Q₁. The first switching element Q₁ is conducted or shut off under the control of the current control unit 23 such that the electric energy of the supply voltage V₁ in a pulse form is transmitted to a first secondary winding coil N₁₂ and a second secondary winding coil N₁₃ of the first transformer T₁. As a consequence, the first secondary winding coil N₁₂ and the second secondary winding coil N₁₃ of the first transformer T₁ are sensed to output pulse currents. In accordance with a feature of the present invention, the turn ratio of the first secondary winding coil N₁₂ to the primary winding coil N₁₁ is equal to the turn ratio of the second secondary winding coil N₁₃ to the primary winding coil N₁₁. As a result, the first secondary winding coil N₁₂ and the second secondary winding coil N₁₃ of the first transformer T₁ are sensed to output substantially identical pulse currents from the first and second output terminals of the current providing circuit 21, respectively.

Please refer to FIG. 3 again. The sharing circuit 22 includes at least one first coupling inductor member L_{c1}. The first coupling inductor member L_{c1} includes a first inductor L_{c11} and a second inductor L_{c12}. The first inductor L_{c11} is connected in series with the first output terminal of the current providing circuit 21, the first rectifier D₁ and the first string of LEDs G₁ₐ∼G_{1b}, thereby defining a first current loop. Likewise, the second inductor L_{c12} is connected in series with the second output terminal of the current providing circuit 21, the second rectifier D₂ and the second string of LEDs G₂ₐ∼G_{2b}, thereby defining a second current loop. By means of the sharing circuit 22, the current flowing through the first string of LEDs G₁ₐ∼G_{1b} is substantially the same as the current flowing through the second string of LEDs G₂ₐ-G_{2b} so that all LEDs have the same brightness levels. In some embodiments, the power supply circuit 2 further includes a first capacitor C₁ and a second capacitor C₂, which are connected to the first string of LEDs G₁ₐ∼G_{1b} and the second string of LEDs G₂ₐ∼G_{2b}, respectively.

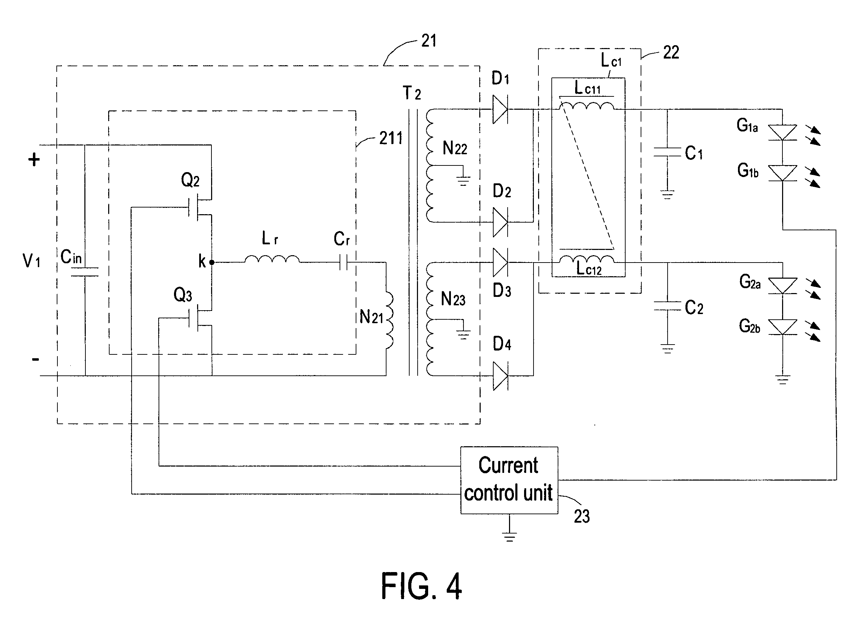

FIG. 4 is a schematic detailed circuit diagram illustrating a part of the power supply circuit according to a further preferred embodiment of the present invention. In this embodiment, the operation principles of the sharing circuit 22, the current control unit 23, the rectifiers D₁∼D₄ and the capacitors C₁∼C₂ are similar to those shown in FIG. 3, and are not redundantly described herein. In addition, the switching circuit 211 of the current providing circuit 21 includes a second switching element Q₂, a third switching element Q₃, a resonant inductor Lᵣ and a resonant capacitor Cᵣ. The second switching element Q₂ and the third switching element Q₃ are coupled to the node k and also the input terminals of the current providing circuit 21 and the input capacitor Cᵢₙ. The resonant inductor Lᵣ and the resonant capacitor Cᵣ are connected in series between the node k and a primary winding coil N₂₁ of a second transformer T₂ for resetting the unbalanced energy resulted in the period of switching on and off the second switching element Q₂ and the third switching element Q₃. Likewise, the switching circuit 211 of the current providing circuit 21 is controlled by the current control unit 23. In this embodiment, under the control of the current control unit 23, the second switching element Q₂ and the third switching element Q₃ are alternately conducted/shut off such that the electric energy of the supply voltage V₁ in a pulse form is transmitted to a first secondary winding coil N₂₂ and a second secondary winding coil N₂₃ of the second transformer T₂. The turn ratio of the first secondary winding coil N₂₂ to the primary winding coil N₂₁ is equal to the turn ratio of the second secondary winding coil N₂₃ to the primary winding coil N₂₁, so that the first secondary winding coil N₂₂ and the second secondary winding coil N₂₃ of the second transformer T₂ are sensed to output substantially identical pulse currents. Especially, since the first secondary winding coil N₂₂ and the second secondary winding coil N₂₃ have respective center taps coupled to a common terminal, the currents outputted from the first secondary winding coil N₂₂ and the second secondary winding coil N₂₃ have different polarities. In this embodiment, both terminals of the first secondary winding coil N₂₂ are respectively connected to the first rectifier D₁ and the second rectifier D₂, and both terminals of the second secondary winding coil N₂₃ are respectively connected to the third rectifier D₃ and the fourth rectifier D₄. As a consequence, the output currents from the current providing circuit 21 are transmitted to the first string of LEDs G₁ₐ∼G_{1b} and the second string of LEDs G₂ₐ∼G_{2b} in the same direction. Meanwhile, the output currents from the first secondary winding coil N₂₂ and the second secondary winding coil N₂₃ of the second transformer T₂ are rectified by the rectifiers D₁∼D₄. Likewise, the first inductor L_{c11} of sharing circuit 22 and the first string of LEDs G₁ₐ∼G_{1b} cooperatively define a first current loop, and the second inductor L_{c12} and the second string of LEDs G₂ₐ∼G_{2b} cooperatively define a second current loop. Similarly, the first capacitor C₁ and the second capacitor C₂ are connected to the first string of LEDs G₁ₐ∼G_{1b} and the second string of LEDs G₂ₐ∼G_{2b}, respectively.

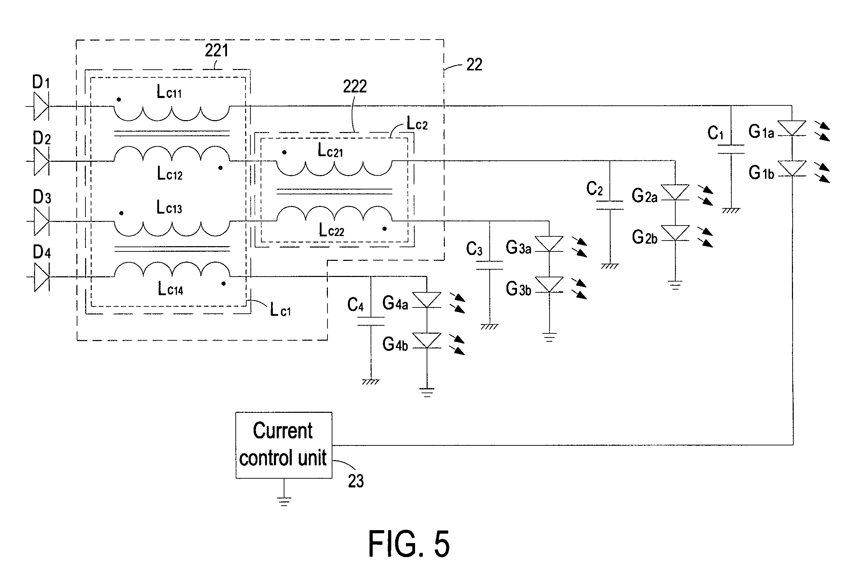

Referring to FIG. 5, an exemplary sharing circuit used in the power supply circuit of the present invention is schematically illustrated. In this embodiment, the power supply circuit is used to drive for example four strings of LEDs G₁ₐ∼G_{4b}. As shown in FIG. 5, the sharing circuit 22 is connected to these four strings of LEDs G₁ₐ∼G_{4b}. The sharing circuit 22 includes at least two sets of inductors. In this embodiment, the sharing circuit includes a first set of inductors 221 and a second set of inductors 222. The first set of inductors 221 includes a first coupling inductor member L_{c1} and the second set of inductors 222 includes a second coupling inductor member L_{c2}. The first coupling inductor member L_{c1} includes the same number of inductors as the strings of LEDs. For example, the first coupling inductor member L_{c1} includes four inductors L_{c11}, L_{c12}, L_{c13} and L_{c14}. The second coupling inductor member L_{c2} has less number of inductors, e.g. two inductors L_{c21} and L_{c22}. The first inductor L_{c11} of the first coupling inductor member L_{c1} is connected in series with the first rectifier D₁ and the first string of LEDs G₁ₐ∼G_{1b} to define a first current loop. The second inductor Lₑ₁₂ of the first coupling inductor member L_{c1} is connected in series with the second rectifier D₂ and the second string of LEDs G₂ₐ∼G_{2b}, thereby defining a second current loop. The third inductor L_{c13} of the first coupling inductor member L_{c1} is connected in series with the third rectifier D₃ and the third string of LEDs G₃ₐ∼G_{3b}, thereby defining a third current loop. The fourth inductor L_{c14} of the first coupling inductor member L_{c1} is connected in series with the fourth rectifier D₄ and the fourth string of LEDs G₄ₐ∼G_{4b}, thereby defining a fourth current loop. Moreover, the first inductor L_{c21} of the second coupling inductor member L_{c2} is intervened in the second current loop and connected with the second inductor L_{c12} of the first coupling inductor member L_{c1}; and the second inductor L_{c22} of the second coupling inductor member L_{c2} is intervened in the third current loop and connected with the third inductor L_{c13} of the first coupling inductor member L_{c1}. Similarly, the first capacitor C₁, the second capacitor C₂, the third capacitor C₃ and the fourth capacitor C₄ are connected to the first string of LEDs G₁ₐ∼G_{1b}, the second string of LEDs G₂ₐ∼G_{2b}, the third string of LEDs G₃ₐ∼G_{3b} and the fourth string of LEDs G₄ₐ∼G_{4b}, respectively.

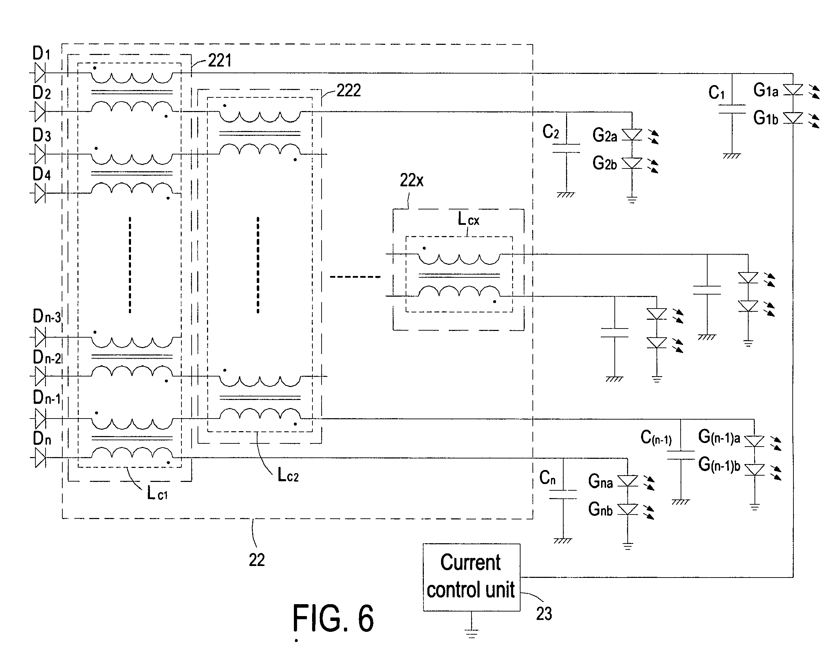

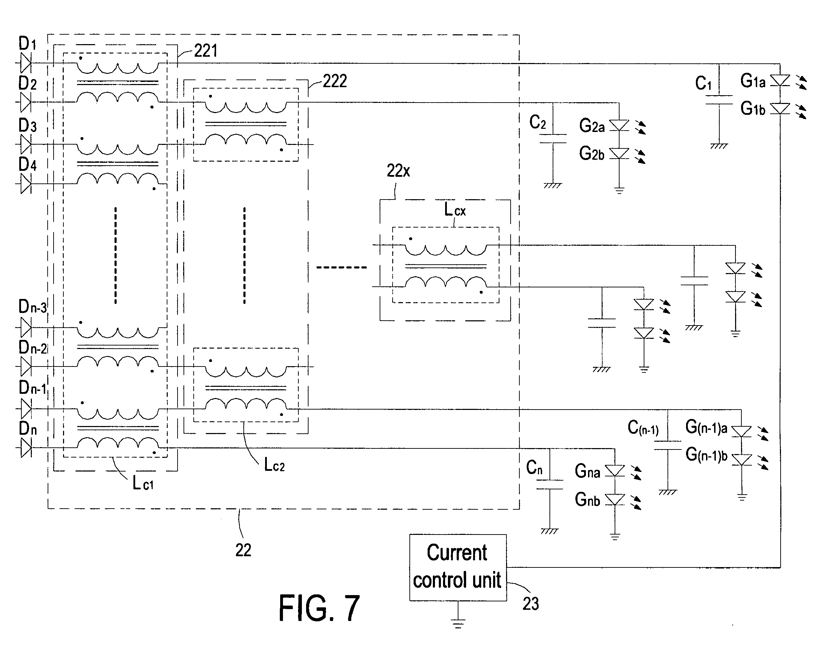

Referring to FIG. 6, another exemplary sharing circuit used in the power supply circuit of the present invention is schematically illustrated. As shown in FIG. 6, the sharing circuit 22 is connected to n strings of LEDs G₁ₐ∼G_{nb}. The sharing circuit 22 includes x sets of inductors 221, 222 - 22x. Each set of the inductors 221, 222 - 22x includes at least one coupling inductor member. In this embodiment, the first set of inductors 221 includes a first coupling inductor member L_{c1}. The second set of inductors 222 includes a second coupling inductor member Lₑ₂. The xth set of inductors 22x includes a xth coupling inductor member L_{cx}. The first coupling inductor member L_{c1} includes the same number of inductors as the strings of LEDs. For example, the first coupling inductor member L_{c1} includes n inductors. The second coupling inductor member L_{c2} has less number of inductors than the first coupling inductor member L_{c1}, for example (n-2) inductors. The rest may be deduced by analogy. That is, the xth coupling inductor member L_{cx} has less number of inductors than the (x-1)th coupling inductor member L_{c(x-1)}. The inductors of the first coupling inductor member L_{c1} are connected in series with corresponding rectifiers D₁∼Dₙ and corresponding LED strings, thereby defining n counts of current loops. Moreover, the inductors included in the latter coupling inductor member are connected to some inductors included in the previous coupling inductor member. A further embodiment of a sharing circuit is illustrated in FIG. 7. In comparison with FIG. 6, one or more sets of the inductors (e.g. the second set of inductors) may include one or more coupling inductor members. Similarly, the power supply circuit 2 further includes plural capacitors C₁∼Cₙ. The capacitors C₁∼Cₙ are connected to corresponding LED strings.

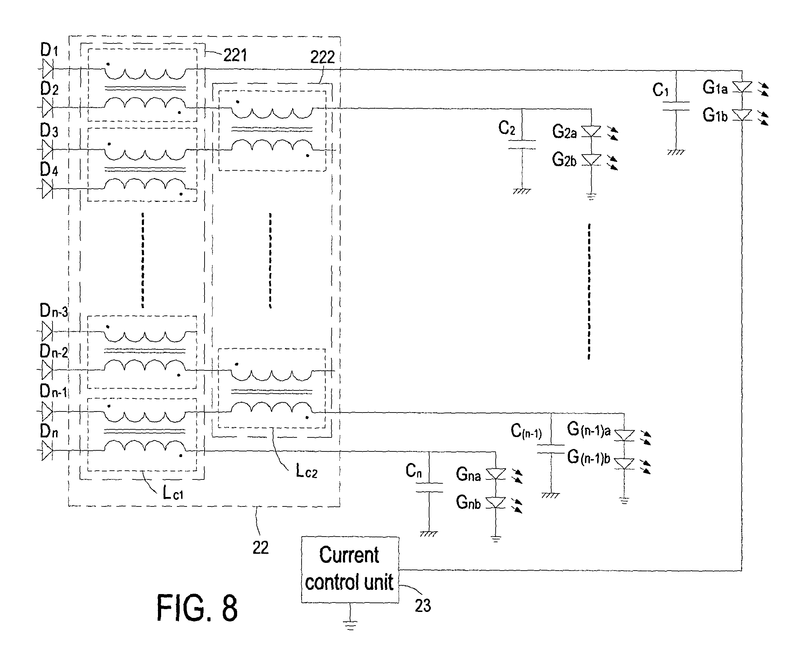

Referring to FIG. 8, a further exemplary sharing circuit used in the power supply circuit of the present invention is schematically illustrated. As shown in FIG. 8, the sharing circuit 22 is connected to n strings of LEDs G₁ₐ∼G_{nb}, where n is an integer ≧ 4 The sharing circuit 22 includes two sets of inductors such as the first set of inductors 221 and the second set of inductors 222. The first set of inductors 221 includes plural first coupling inductor members L_{c1}, and the second set of inductors 222 includes plural second coupling inductor members L_{c2}. The first set of inductors 221 includes (n/2) counts of first coupling inductor members L_{c1}. The total number of inductors included in these (n/2) counts of first coupling inductor members L_{c1} is n, which is equal to the number of the LED strings. The second set of inductors 222 has less number of inductors than the first set of inductors 221. For example, the second set of inductors 222 includes (n-2) inductors or [(n-2)/2] second coupling inductor members L_{c2}. In other words, the sharing circuit 22 has a total of (n-1) counts of coupling inductor members, i.e. (n/2) + [(n-2)/2] = n-1. Similarly, the inductors of all the first coupling inductor members L_{c1} (e.g. the first set of inductors 221) are connected in series with corresponding rectifiers D₁∼Dₙ and corresponding LED strings, thereby defining n counts of current loops. Moreover, the inductors included in all the second coupling inductor member L_{c2} (e.g. the second set of inductors 222) are connected to some inductors included in the first coupling inductor members L_{c1} (e.g. the first set of inductors 221).

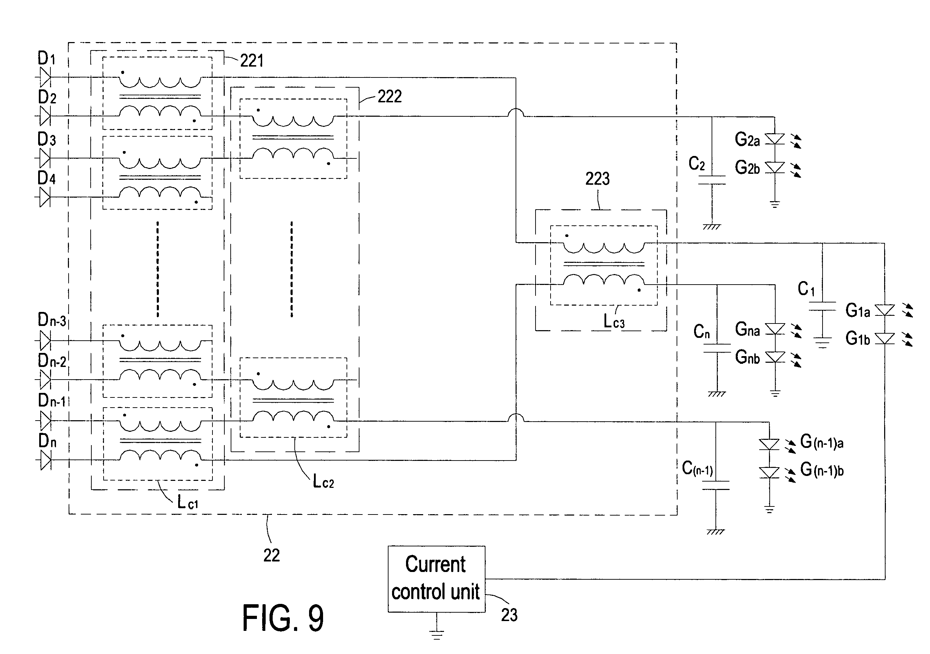

Referring to FIG.9, a further exemplary sharing circuit used in the power supply circuit of the present invention is schematically illustrated. As shown in FIG. 9, the sharing circuit 22 is connected to n strings of LEDs G₁ₐ∼G_{nb}. The sharing circuit 22 includes three sets of inductors for example a first set of inductors 221, a second set of inductors 222 and a third set of inductors 223. The first set of inductors 221 includes plural first coupling inductor members L_{c1}, the second set of inductors 222 includes plural second coupling inductor members L_{c2}, and the third set of inductors 223 includes a third coupling inductor member L_{c3}. The first set of inductors 221 includes (n/2) counts of first coupling inductor members L_{c1}. The total number of inductors included in these (n/2) counts of first coupling inductor members L_{c1} is n, which is equal to the number of the LED strings. The second set of inductors 222 has less number of inductors than the first set of inductors 221. For example, the second set of inductors 222 includes (n-2) inductors or [(n-2)/2] second coupling inductor members L_{c2}. The third set of inductors 223 has less number of inductors than the second set of inductors 222. For example, the third set of inductors 223 includes two inductors or single coupling inductor member L_{cb}. In other words, the sharing circuit 22 has a total of n counts of coupling inductor members, i.e. (n/2) + [(n-2)/2] + 1 = n. Similarly, the inductors of all the first coupling inductor members L_{c1} (e.g. the first set of inductors 221) are connected in series with corresponding rectifiers D₁-Dₙ and corresponding LED strings, thereby defining n counts of current loops. Moreover, the inductors included in all the second coupling inductor members L_{c2} (e.g. the second set of inductors 222) are connected to some inductors included in the first coupling inductor members L_{c1} (e.g. the first set of inductors 221). In this embodiment, the connection structure and method between inductors included in the first coupling inductor members L_{c1} (e.g. the first set of inductors 221) and the inductors included in the second coupling inductor members L_{c2} (e.g. the second set of inductors 222) are similar to those shown in FIG. 8, and are not redundantly described herein. The third coupling inductor member L_{c3} (e.g. the third set of inductors 223) includes two inductors. The two inductors of the third coupling inductor member L_{c3} (e.g. the third set of inductors 223) are connected to the first inductor and the last inductor included in the first coupling inductor members L_{c1} (e.g. the first set of inductors 221), respectively. Therefore, the currents flowing through n strings of LEDs G₁ₐ∼G_{nb} are substantially the same by employing the sharing circuit 22. In addition, the sharing circuit 22 can avoid the damages to the power supply circuit or the LED strings when short circuit is occurred and provides protection functions. Similarly, the power supply circuit 2 further includes plural capacitors C₁∼Cₙ. The capacitors C₁∼Cₙ are connected to corresponding LED strings.

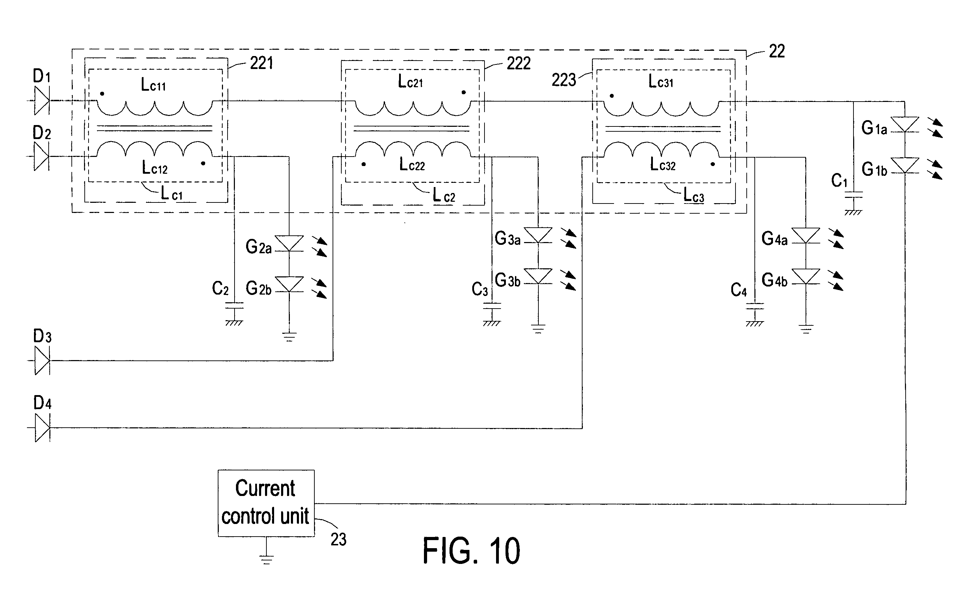

Referring to FIG. 10, a further exemplary sharing circuit used in the power supply circuit of the present invention is schematically illustrated. In this embodiment, the power supply circuit 2 is used to drive for example four strings of LEDs G₁ₐ∼G_{4b}. As shown in FIG. 10, the sharing circuit 22 is connected to these four strings of LEDs G₁ₐ∼G_{4b}. The sharing circuit 22 includes three sets of inductors for example a first set of inductors 221, a second set of inductors 222 and a third set of inductors 223. The first set of inductors 221 includes a first coupling inductor member L_{c1}, and the first coupling inductor member L_{c1} includes two inductors L_{c11} and L_{c12}. The second set of inductors 222 includes a second coupling inductor member L_{c2}, and the second coupling inductor member L_{c2} includes two inductors L_{c21} and L_{c22}. The second set of inductors 222 has equal number of inductors to the first set of inductors 221. The third set of inductors 223 includes a third coupling inductor member L_{c3}, and the third coupling inductor member L_{c3} includes two inductors L_{c31} and L_{c32}. The third set of inductors 223 has equal number of inductors to each of the first set of inductors 221 and the second set of inductors 222.

In this embodiment, the first inductor L_{c11} and the second inductor L_{c12} of the first coupling inductor member L_{c1} (e.g. the first set of inductors 221) are connected in series with the first string of LEDs G₁ₐ∼G_{1b} and the second string of LEDs G₂ₐ∼G_{2b}, respectively, to define a first current loop and a second current loop. Moreover, the first inductor L_{c1} of the first coupling inductor member L_{c1} is connected in series with the first rectifier D₁, the first capacitor C₁ and the first string of LEDs G₁ₐ∼G_{1b}, thereby defining the first current loop. The second inductor L_{c12} of the first coupling inductor member L_{c1} is connected in series with the second rectifier D₂, the second capacitor C₂ and the second string of LEDs G₂ₐ∼G_{2b}, thereby defining the second current loop. The first inductor L_{c21} included in the second coupling inductor member L_{c2} (e.g. the second set of inductors 222) is connected to the first inductor L_{c11} included in the first coupling inductor member L_{c1} (e.g. the first set of inductors 221). The second inductor L_{c22} of the second coupling inductor member L_{c2} (e.g. the second set of inductors 222) is connected in series with the third string of LEDs G₃ₐ∼G_{3b} to define a third current loop. Moreover, the second inductor L_{c22} of the second coupling inductor member L_{c2} is connected in series with the third rectifier D₃, the third capacitor C₃ and the third string of LEDs G₃ₐ∼G_{3b}, thereby defining the third current loop. In addition, the first inductor L_{c31} included in the third coupling inductor member L_{c3} (e.g. the third set of inductors 223) is connected to the first inductor L_{c11} included in the first coupling inductor member L_{c1} (e.g. the first set of inductors 221) and the first inductor L_{c21} included in the second coupling inductor member L_{c2} (e.g. the second set of inductors 222). The second inductor L_{c32} of the third coupling inductor member L_{c3} (e.g. the third set of inductors 223) is connected in series with the fourth string of LEDs G₄ₐ∼G_{4b} to define a fourth current loop. Moreover, the second inductor L_{c32} of the third coupling inductor member L_{c3} is connected in series with the fourth rectifier D₄, the fourth capacitor C₄ and the fourth string of LEDs G₄ₐ∼G_{4b}, thereby defining the fourth current loop. Namely, the first inductor L_{c11} of the first coupling inductor member L_{c1} is connected in series with the first rectifier D₁, the first inductor L_{c21} of the second coupling inductor member L_{c2}, the first inductor L_{c31} of the third coupling inductor member L_{c3}, the first capacitor C₁ and the first string of LEDs G₁ₐ∼G_{1b}, thereby defining the first current loop.

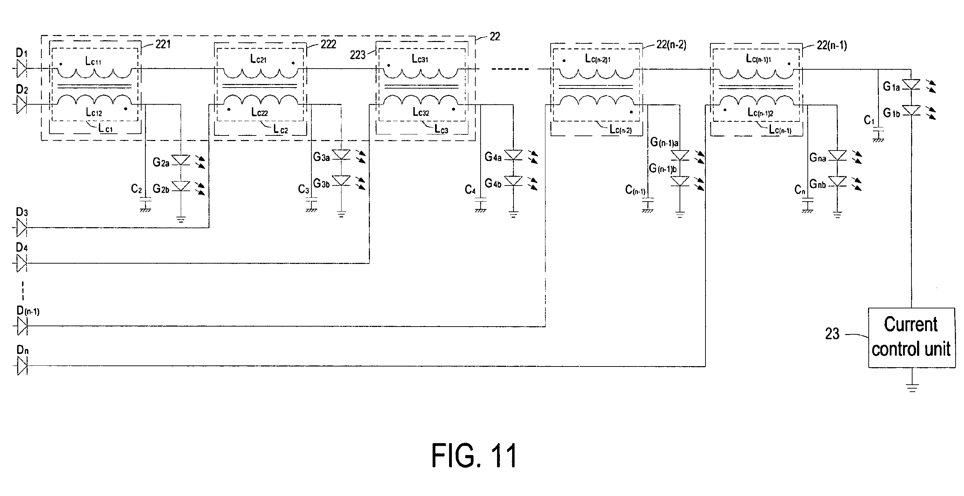

Referring to FIG. 11, a further exemplary sharing circuit used in the power supply circuit of the present invention is schematically illustrated. In this embodiment, the power supply circuit 2 is used to drive plural strings of LEDs for example n strings of LEDs G₁ₐ∼G_{nb}. As shown in FIG. 11, the sharing circuit 22 is connected to these n strings of LEDs G₁ₐ∼G_{nb}. The sharing circuit 22 includes (n-1) sets of inductors for example a first set of inductors 221, a second set of inductors 222, a third set of inductors 223 - a (n-1)th set of inductors 22(n-1). The first set of inductors 221 includes a first coupling inductor member L_{c1}, and the first coupling inductor member L_{c1} includes two inductors L_{c11} and L_{c12}. The second set of inductors 222 includes a second coupling inductor member L_{c2}, and the second coupling inductor member L_{c2} includes two inductors L_{c21} and L_{c22}. The second set of inductors 222 has equal number of inductors to the first set of inductors 221. The third set of inductors 223 includes a third coupling inductor member L_{c3}, and the third coupling inductor member L_{c3} includes two inductors L_{c31} and L_{c32}. The third set of inductors 223 has equal number of inductors to each of the first set of inductors 221 and the second set of inductors 222. Similarly, the (n-1)th set of inductors 22(n-1) includes a (n-1)th coupling inductor member L_{c(n-1)}, and the (n-1)th coupling inductor member L_{c(n-1)} includes two inductors L_{c(n-1)1} and L_{c(n-1)2}. The (n-1)th set of inductors 22(n-1) has equal number of inductors to each of the other sets of inductors. It is obvious that the sharing circuit 22 has a total of (n-1) counts of coupling inductor members.

In this embodiment, the first inductor L_{c11} and the second inductor L_{c12} of the first coupling inductor member L_{c1} (e.g. the first set of inductors 221) are connected in series with the first string of LEDs G₁ₐ∼G_{1b} and the second string of LEDs G₂ₐ∼G_{2b}, respectively, to define a first current loop and a second current loop. Moreover, the first inductor L_{c11} of the first coupling inductor member L_{c1} is connected in series with the first rectifier D₁, the first capacitor C₁ and the first string of LEDs G₁ₐ∼G_{1b}, thereby defining the first current loop. The second inductor L_{c12} of the first coupling inductor member L_{c1} is connected in series with the second rectifier D₂, the second capacitor C₂ and the second string of LEDs G₂ₐ∼G_{2b}, thereby defining the second current loop. The first inductor L_{c21} included in the second coupling inductor member L_{c2} (e.g. the second set of inductors 222) is connected to the first inductor L_{c11} included in the first coupling inductor member L_{c1} (e.g. the first set of inductors 221). The second inductor L_{c22} of the second coupling inductor member L_{c2} (e.g. the second set of inductors 222) is connected in series with the third string of LEDs G₃ₐ∼G_{3b} to define a third current loop. Moreover, the second inductor L_{c22} of the second coupling inductor member L_{c2} is connected in series with the third rectifier D₃, the third capacitor C₃ and the third string of LEDs G₃ₐ∼G_{3b}, thereby defining the third current loop. In addition, the first inductor L_{c31} included in the third coupling inductor member L_{c3} (e.g. the third set of inductors 223) is connected to the first inductor L_{c11} included in the first coupling inductor member L_{c1} (e.g. the first set of inductors 221) and the first inductor L_{c21} included in the second coupling inductor member L_{c2} (e.g. the second set of inductors 222). The second inductor L_{c32} of the third coupling inductor member L_{c3} (e.g. the third set of inductors 223) is connected in series with the fourth string of LEDs G₄ₐ∼G_{4b} to define a fourth current loop. Moreover, the second inductor L_{c32} of the third coupling inductor member L_{c3} is connected in series with the fourth rectifier D₄, the fourth capacitor C₄ and the fourth string of LEDs G₄ₐ∼G_{4b}, thereby defining the fourth current loop. Similarly, the first inductor L_{c(n-1)1} included in the (n-1)th coupling inductor member L_{c(n-1)} (e.g. the (n-1)th set of inductors 22(n-1)) is connected in series with the first inductor L_{c11} included in the first coupling inductor member L_{c1} (e.g. the first set of inductors 221), the first inductor L_{c21} included in the second coupling inductor member L_{c2} (e.g. the second set of inductors 222), the first inductor L_{c31} included in the third coupling inductor member L_{c3} (e.g. the third set of inductors 223) - the first inductor L_{c(n-2)1} included in the (n-2)th coupling inductor member L_{c(n-2)} (e.g. the (n-2)th set of inductors 22(n-2)). The second inductor L_{c(n-1)2} of the (n-1)th coupling inductor member L_{c(n-1)} (e.g. the (n-1)th set of inductors 22(n-1)) is connected in series with the nth string of LEDs Gₙₐ∼G_{nb} to define a nth current loop. Moreover, the second inductor L_{c(n-1)2} of the (n-1)th coupling inductor member L_{c(n-1)} is connected in series with the nth rectifier Dₙ, the nth capacitor Cₙ and the nth string of LEDs Gₙₐ∼G_{nb}, thereby defining the nth current loop. Namely, the first inductor L_{c11} of the first coupling inductor member L_{c1} is connected in series with the first rectifier D₁, the first inductor L_{c21} of the second coupling inductor member L_{c2}, the first inductor L_{c31} of the third coupling inductor member L_{c3} ∼ the first inductor Lₑ₍ₙ₋₁₎₁ of the (n-1)th coupling inductor member L_{c(n-1)}, the first capacitor C₁ and the first string of LEDs G₁ₐ∼G_{1b}, thereby defining the first current loop. Therefore, the currents flowing through n strings of LEDs G₁ₐ∼G_{nb} are substantially the same and all LEDs G₁ₐ∼G_{nb} have the same brightness values by employing the sharing circuit 22.

From the above embodiment, the power supply circuit of the present invention is capable of balancing the currents passing through the multiple sets of DC loads for example LED strings and thus all LEDs have the same brightness values. In addition, the power supply circuit of the present invention has minimized power loss and high operating efficiency. Since the circuitry configuration is simplified, the power supply circuit is more cost-effective.

While the invention has been described in terms of what is presently considered to be the most practical and preferred embodiments, it is to be understood that the invention needs not be limited to the disclosed embodiment. On the contrary, it is intended to cover various modifications and similar arrangements included within the spirit and scope of the appended claims which are to be accorded with the broadest interpretation so as to encompass all such modifications and similar structures.

## Claims

1. A power supply circuit with current sharing for driving multiple sets of DC loads, comprising:
a current providing circuit for receiving and regulating a supply voltage into specified output currents to be supplied to said multiple sets of DC loads;
a sharing circuit connected in series with output terminals of said current providing circuit and said multiple sets of DC loads, wherein said sharing circuit includes at least one coupling inductor member for performing equal current sharing among said multiple sets of DC loads; and
a current control unit connected to said current providing circuit and said multiple sets of DC loads for detecting magnitudes of the current passing through said multiple sets of DC loads and controlling said output currents from said current providing circuit.

2. The power supply circuit according to claim 1 further comprising multiple rectifiers, which are connected in series with said output terminals of said current providing circuit, said sharing circuit and said multiple sets of DC loads.

3. The power supply circuit according to claim 2 wherein said multiple rectifiers are connected in series between said output terminals of said current providing circuit and said sharing circuit or between said sharing circuit and said multiple sets of DC loads.

4. The power supply circuit according to claim 1 further comprising a power rectifying circuit, which is connected to an input terminal of said current providing circuit, for receiving and converting an input AC voltage into said supply voltage to be inputted into said current providing circuit.

5. The power supply circuit according to claim 1 further comprising:
a filtering circuit connected to an input terminal of said current providing circuit for filtering off undesired high frequency noise; and
multiple capacitors connected to corresponding sets of DC loads.

6. The power supply circuit according to claim 1 wherein said current providing circuit further comprises:
a switching circuit including at least one switching element and connected to said current control unit and an input terminal of said current providing circuit; and
a transformer comprising a primary winding coil and multiple secondary winding coils, wherein said primary winding coil is connected to said switching circuit and another input terminal of said current providing circuit.

7. The power supply circuit according to claim 6 wherein said switching circuit comprises a first switching element, wherein said first switching element is conducted or shut off under control of said current control unit such that the electric energy of said supply voltage is transmitted to said secondary winding coils of said transformer, and the turn ratio of each secondary winding coil to said primary winding coil is identical.

8. The power supply circuit according to claim 6 wherein said switching circuit comprises a second switching element, a third switching element, a resonant inductor and a resonant capacitor, wherein said second switching element and said third switching element are coupled to a node and connected with said current control unit and said input terminals of said current providing circuit, and said resonant inductor and said resonant capacitor are connected in series between said node and said primary winding coil of said transformer.

9. The power supply circuit according to claim 8 wherein said second switching element and said third switching element are alternately conducted/shut off under control of said current control unit such that the electric energy of said supply voltage is transmitted to said secondary winding coils of said transformer, and said secondary winding coils of said transformer have respective center taps coupled to a common terminal.

10. The power supply circuit according to claim 1 wherein said sharing circuit comprises a coupling inductor member with multiple inductors, which are connected in series with corresponding sets of DC loads.

11. The power supply circuit according to claim 1 wherein said sharing circuit comprises multiple sets of inductors, each set of said multiple sets of inductors includes at least one coupling inductor member, and each of said coupling inductor member has multiple inductors.

12. The power supply circuit according to claim 11 wherein said sharing circuit comprises a first set of inductors and a second set of inductors, wherein said first set of inductors includes the same number of inductors as said multiple sets of DC loads and said inductors of said first set of inductors are connected in series with corresponding sets of DC loads.

13. The power supply circuit according to claim 12 wherein said first set of inductors includes one or more coupling inductor members.

14. The power supply circuit according to claim 13 wherein said second set of inductors has less number of inductors than said first set of inductors, and said second set of inductors includes one or more coupling inductor members.

15. The power supply circuit according to claim 14 wherein each inductor of said first set of inductors is connected to a corresponding set of DC loads to form a current loop, and said inductors of said second set of inductors are connected to some inductors of said first set of inductors.

16. The power supply circuit according to claim 15 wherein said sharing circuit further comprises a third set of inductors, wherein said third set of inductors includes a single coupling inductor member comprising two inductors.

17. The power supply circuit according to claim 16 wherein said two inductors of said third set of inductors are connected to a first inductor and a last inductor of said first set of inductors, respectively.

18. The power supply circuit according to claim 1 wherein said sharing circuit comprises multiple sets of inductors, each set of said multiple sets of inductors includes a coupling inductor member, and each said coupling inductor member has two inductors including a first inductor and a second inductor.

19. The power supply circuit according to claim 18 wherein all of said first inductors of said multiple sets of inductors and at least one set of said multiple sets of DC loads are connected in series with each other.

20. The power supply circuit according to claim 19 wherein each said second inductor of each coupling inductor member is connected in series with a corresponding set of DC loads of the remaining sets of DC loads.

21. The power supply circuit according to claim 1 wherein said multiple sets of DC loads are multiple LED strings, and said power supply circuit is a power supply circuit with current sharing for driving multiple LED strings.

22. The power supply circuit according to claim 21 wherein each of said multiple LED strings includes a plurality of LEDs, and said output currents outputted from said current providing circuit are pulse currents.

23. A sharing circuit for use in a power supply circuit with current sharing for driving multiple sets of DC loads, said power supply circuit comprising a current providing circuit for receiving and regulating a supply voltage into specified output currents to be supplied to said multiple sets of DC loads, said sharing circuit being connected in series with output terminals of said current providing circuit and said multiple sets of DC loads, said sharing circuit comprising:
at least one set of inductors, each set of said at least one set of inductors comprising at least one coupling inductor member, each said coupling inductor member comprising plural inductors for performing equal current sharing among said multiple sets of DC loads.
